Europäisches Patentamt

European Patent Office

Office européen des brevets

(11) Veröffentlichungsnummer: **0 335 422**
**A2**

(12) **EUROPÄISCHE PATENTANMELDUNG**

(21) Anmeldenummer: 89105727.5

(22) Anmeldetag: 31.03.89

(51) Int. Cl.⁴: **C08G 77/02 , C08G 77/58 , C08G 77/56 , C03C 3/00**

(30) Priorität: 31.03.88 DE 3811185

(43) Veröffentlichungstag der Anmeldung:
**04.10.89 Patentblatt 89/40**

(84) Benannte Vertragsstaaten:
**AT BE CH DE ES FR GB GR IT LI LU NL SE**

(71) Anmelder: **FRAUNHOFER-GESELLSCHAFT ZUR FÖRDERUNG DER ANGEWANDTEN FORSCHUNG E.V.
Leonrodstrasse 54
D-8000 München 19(DE)**

(72) Erfinder: **Strehlow, Peter
Steinburgstrasse 89
D-8700 Würzburg(DE)**
Erfinder: **Schmidt, Helmut
Badstrasse 2
D-8705 Zellingen(DE)**

(74) Vertreter: **Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)**

(54) **Verfahren zur Herstellung von zu Glas verarbeitbaren Kondensationsprodukten.**

(57) Es wird ein Verfahren zur Herstellung von zu Glas verarbeitbaren Kondensationsprodukten beschrieben, bei dem man mindestens eine zu $SiO_2$ hydrolysierbare Siliciumverbindung, mindestens eine zu $Al_2O_3$, $B_2O_3$ oder $TiO_2$ hydrolysierbare Verbindung und mindestens eine hydrolysierbare Alkali- oder Erdalkalimetallverbindung mit mindestens der stöchiometrisch erforderlichen Wassermenge in Kontakt bringt. Erfindungsgemäß erfolgt die Hydrolyse in Anwesenheit eines Komplexbildners, der ausgewählt ist aus $\beta$-Carbonylcarbonsäureestern und $C_2$-$C_5$-Carbonsäuren oder deren Carboxylationen, wodurch verhindert wird, daß sich Präzipitate aus Hydrolyseprodukten der sehr reaktiven Aluminium- und Borverbindungen bilden während die weniger reaktiven Siliciumverbindungen noch unverändert oder nur teilweise hydrolysiert vorliegen. Die so hergestellten Kondensationsprodukte können nach dem Trocknen unter thermischer Verdichtung zu Glas gesintert werden, ohne daß dabei die Glasübergangstemperatur des betreffenden Glases wesentlich überschritten werden muß.

# VERFAHREN ZUR HERSTELLUNG VON ZU GLAS VERARBEITBAREN KONDENSATIONSPRODUKTEN

:

Die vorliegende Erfindung betrifft die Herstellung von Glas, insbesondere ein Verfahren zur Herstellung von zu Glas verarbeitbaren Kondensationsprodukten.

Bei der konventionellen Herstellung von Glas werden die Elemente, deren Anwesenheit im Glas-Endprodukt gewünscht wird, in der Regel in Form fester Verbindungen, z.B. der Oxide, vermischt, worauf die resultierende Mischung auf hohe Temperaturen, insbesondere Temperaturen, die erheblich über der Glasübergangstemperatur des resultierenden Glases liegen, erhitzt wird, um eine Glasschmelze zu erhalten. Beim Abkühlen dieser Schmelze unter die Glasübergangstemperatur trifft man jedoch bei vielen Gläsern mit erhöhter Kristallisationsneigung, wie z.B. Bariumaluminiumsilicatgläsern auf die Schwierigkeit, daß während des Abkühlvorgangs Kristallisationsprozesse einsetzen, so daß in derartigen Systemen das Glas über Abkühlungsprozesse kaum kristallitfrei erhältlich ist. Man hat deshalb versucht, diese Schwierigkeiten bei der Herstellung von verstärkt zur Kristallisation neigenden Gläsern durch das Sol-Gel-Verfahren zu umgehen. Bei diesem Verfahren werden die Elemente, deren Anwesenheit im Glas-Endprodukt gewünscht wird, in Form hydrolysierbarer Verbindungen, insbesondere der Alkoxide, eingesetzt, die man in Lösung durch Zugabe von Wasser hydrolysiert, wodurch sich Polykondensate bilden, die dann in geeigneter Weise getrocknet und calciniert werden. Die calcinierten Produkte können dann bei Temperaturen, die noch unter oder nur wenig über der Glasübergangstemperatur des betreffenden Glases liegen, zu einem Glas gesintert werden. Dadurch werden Temperaturbereiche, bei denen die Glasschmelze verstärkt zur Kristallisation neigt, vermieden. Leider ist aber auch das Sol-Gel-Verfahren nicht völlig unproblematisch, da die eingesetzten hydrolysierbaren Verbindungen meistens eine unterschiedliche Reaktivität gegenüber Wasser aufweisen, so daß die Zugabe von Wasser so geschehen muß, daß einsteils die hochreaktiven Verbindungen noch nicht so weit hydrolysiert und kondensiert werden, daß sie aus dem Reaktionssystem, d.h. aus der Lösung, ausfallen und dennoch die weniger reaktiven Verbindungen im wesentlichen vollständig hydrolysiert werden. Da es offensichtlich sehr schwierig ist, diesen Anforderungen gerecht zu werden, führt das herkömmliche Sol-Gel-Verfahren dazu, daß es während der Hydrolyse und Kondensation zur Bildung von Präzipitaten kommt, wodurch in der Regel keine Gläser entstehen, sondern zumindest teilkristallisierte Produkte. Voraussetzung für die Entstehung von Gläsern sind nämlich sehr homogene Materialien, bei denen die Verteilung der einzelnen Komponenten im molekularen Bereich noch gegeben ist. Treten in Solphasen Separationsprozesse auf, ist die Entstehung von kristallinen Produkten die Folge. Ist es hingegen durch sehr vorsichtige Reaktionsführung gelungen, das Auftreten von Präzipitaten zu vermeiden, lassen sich auf diese Weise in der Regel keine Gläser mit vorgegebener Stöchiometrie herstellen, da in diesem Fall die weniger reaktive (und meist auch leichtflüchtige) Komponente, z.B. der Kieselsäureester, noch nicht vollständig hydrolysiert bzw. an das sich bildende Netzwerk fixiert ist und deshalb bei den anschließenden Erhitzungsstufen oder schon während der Umsetzung sich der nicht-umgesetzte Teil verflüchtigt, so daß im Endprodukt weniger Silicium vorhanden ist, als man dies aufgrund der eingesetzten Ausgangsmaterialien erwarten würde.

Eine Lösung dieses Problems, insbesondere für Aluminium-, Bor- und Titan-haltige Gläser, wurde in DE-B-1 941 191 vorgeschlagen. Dort werden beim Sol-Gel-Verfahren Lösungen von Verbindungen dieser Elemente zur Stabilisierung mit Chelatbildner versetzt. Erwähnt sind Acetylaceton und Triethanolamin. Die Hydrolyse der eingesetzten hydrolysierbaren Verbindungen geschieht dort in einem diffusionskontrollierten Prozeß, nämlich durch Kondensieren von Wasser aus der umgebenden Luftfeuchtigkeit.

Diese diffusionskontrollierte Hydrolyse weist aber zwei entscheidende Nachteile auf: sie verzögert den Sol-Gel-Prozeß erheblich, und außerdem gelingt es mit ihr nicht, die als Netzwerkwandler wirksamen Erdalkalimetalle in größeren prozentualen Anteilen (ca. > 5%) stöchiometrisch in das Netzwerk einzubauen.

Versucht man, wie normalerweise im Sol-Gel-Verfahren, den Hydrolyseprozeß bei obigem Verfahren so durchzuführen, daß man anstelle der Luftfeuchtigkeit von vornherein Wasser dem Reaktionsgemisch zugibt, dann fallen aus den wasserhaltigen Lösungen bei Verwendung der in DE-B-1 941 191 angegebenen Komplexbildner Metallkomplexe aus. Damit sind die oben erwähnte Entstehung von kristallinen Produkten und von Produkten, die nicht der vorgegebenen Stöchiometrie entsprechen, verbunden.

Die Aufgabe der vorliegenden Erfindung bestand also darin, ein Verfahren zur Herstellung von zu Glas verarbeitbaren Kondensationsprodukten nach dem Sol-Gel-Prozeß zur Verfügung zu stellen, das es ermöglicht, auch Gläser, die einen hohem Anteil an Aluminium und/oder Bor und/oder Titan und Alkali- und/oder Erdalkalimetalle aufweisen, mit einer vorausberechenbaren Stöchiometrie unter beschleunigten Hydrolysebedingungen durch direkte Zugabe von Wasser herzustellen.

Erfindungsgemäß wird diese Aufgabe gelöst durch ein Verfahren zur Herstellung von zu Glas verarbeitbaren Kondensations produkten durch hydrolytische Kondensation von Verbindungen der Elemente, deren Anwesenheit im Glas-Endprodukt gewünscht wird, das dadurch gekennzeichnet ist, daß man, gegebenenfalls in Anwesenheit eines Kondensationskatalysators, eine Lösung, enthaltend

(a) mindestens eine Verbindung der allgemeinen Formel (I)

$SiR_4$ (I)

in welcher die Reste R, die gleich oder verschieden sein können, hydrolysierbare Gruppen oder Hydroxy bedeuten, und/oder ein davon abgeleitetes Oligomeres;

(b) mindestens eine Verbindung der allgemeinen Formel (II) oder (III)

$MR'_3$ (II)

$TiR'_4$ (III)

in welchen M für Al oder B steht und die Reste R', die gleich oder verschieden sein können, hydrolysierbare Gruppen oder Hydroxy bedeuten, und/oder ein hydrolysierbares Aluminiumsalz und/oder ein von diesen Verbindungen abgeleitetes Oligomeres; sowie

(c) mindestens eine hydrolysierbare Verbindung oder mindestens ein Hydroxid, Oxid oder Oxidhydrat eines Elements aus der Gruppe Lithium, Natrium, Kalium, Rubidium, Cäsium, Beryllium, Magnesium, Calcium, Strontium und Barium

in Anwesenheit eines Komplexbildners, der ausgewählt ist aus β-Carbonylcarbonsäureestern und $C_2$-$C_5$-Carbonsäuren oder deren Carboxylationen, mit mindestens der zur vollständigen Hydrolyse der anwesenden hydrolysierbaren Gruppen stöchiometrisch erforderlichen Wassermenge in Kontakt bringt.

Die so hergestellte Reaktionsmischung wird dann gegebenenfalls mehrere Stunden vorzugsweise bei Raumtemperatur belassen bzw gerührt. Das resultierende Produkt kann dann in geeigneter Weise, insbesondere durch Behandlung bei erhöhter Temperatur (Trocknung und Calcinierung),von flüchtigen und durch thermische Zersetzung verflüchtigbaren Bestandteilen befreit werden. Das so erhaltene Gelpulver kann dann in an sich bekannter Weise zu einem Glas gesintert werden.

Als Siliciumverbindung der allgemeinen Formel (I) eignen sich erfindungsgemäß alle Verbindungen, die sich durch Reaktion mit Wasser zu Kieselsäure hydrolysieren lassen. Diese Verbindungen sollten außerdem in dem als Reaktionsmedium verwendeten organischen Lösungsmittel, soweit ein solches verwendet wird, in merklichem Maße löslich sein

In der allgemeinen Formel (I) können die Reste R gleich oder verschieden sein und z.B. Wasserstoff, Halogen, Alkoxy, Acyloxy, $-NR''_2$ ($R''$ = H und/oder Alkyl), Alkylcarbonyl oder Alkoxycarbonyl bedeuten. Bevorzugt werden solche Reste, die bei der Hydrolyse zu Produkten führen, die leicht flüchtig sind oder sich durch thermische Zersetzung unterhalb der Glasübergangstemperatur des gewünschten Glas-Endprodukts durch thermische Zersetzung verflüchtigen lassen. (Dies gilt im übrigen auch für die Reste der anderen erfindungsgemäß eingesetzten Verbindungen, die als Komplexbildner wirkende Spezies und den gegebenenfalls anwesenden Kondensationskatalysator und das Lösungsmittel). Deshalb werden als Reste R in der Formel (I) Alkoxy, Acyloxy, $-NR''_2$ ($R''$ = H und/oder Alkyl), und/oder Hydroxy bevorzugt, wobei Alkoxygruppen und/oder Hydroxygruppen besonders bevorzugt sind.

Für die vorstehend genannten allgemeinen Bedeutungen gilt:

Alkoxy-, Acyloxy-, Alkylamino-, Dialkylamino-, Alkylcarbonyl-und Alkoxycarbonylreste leiten sich ab von geradkettigen, verzweigten oder cyclischen Alkylresten mit z B. 1 bis 20, vorzugsweise 1 bis 10 Kohlenstoffatomen, wobei niedere Alkylreste mit 1 bis 6, vorzugsweise 1 bis 4 Kohlenstoffatomen, besonders bevorzugt sind. Spezielle Beispiele sind Methyl, Ethyl, n-Propyl, Isopropyl, n-Butyl, sek.-Butyl, tert.-Butyl, Isobutyl, n-Pentyl, n-Hexyl und Cyclohexyl.

Spezielle Beispiele für Reste R sind Methoxy, Ethoxy, n- und i-Propoxy, n-, sek.- und tert.-Butoxy, Isobutoxy, β-Methoxyethoxy,Acetyloxy, Propionyloxy, Monomethylamino, Monoethylamino, Dimethylamino, Diethylamino, Methylcarbonyl, Ethylcarbonyl, Methoxycarbonyl und Ethoxycarbonyl.

Selbstverständlich können die oben genannten Alkylreste gegebenenfalls 1 oder mehrere Substituenten tragen, z B. Halogenatome, $C_{1-4}$-Alkoxyreste, Nitrogruppen und Arylgruppen. Außerdem kann die Kohlenstoffkette ein oder mehrere Doppel- und/oder Dreifachbindungen enthalten und durch ein oder mehrere Heteroatome, insbesondere 0, S und N($R''$), unterbrochen sein. Da aber die aus der Gruppe R bei der Hydrolyse entstehenden Verbindungen im gewünschten Endprodukt (Glas) nicht enthalten sein und auch keine Spuren hinterlassen sollen, wird es bevorzugt, als Reste R solche mit nicht zu hohem Molekulargewicht zu wählen, die keine Atome enthalten, die im Endprodukt zurückbleiben.

Halogen bedeutet Fluor, Chlor, Brom und Jod, insbesondere Chlor.

Konkrete Beispiele für Verbindungen der allgemeinen Formel (I) sind:

$Si(OCH_3)_4$, $Si(OC_2H_5)_4$, $Si(n-OC_3H_7)_4$, $Si(i-OC_3H_7)_4$, $Si(OC_4H_9)_4$, $Si(OOCCH_3)_4$ und $Si(OOCC_2H_5)_4$.

Als Komponente (b), d.h. als Al-, B- und/oder Ti-Verbindung eignen sich erfindungsgemäß insbesondere solche im verwendeten Reaktionsmedium lösliche Verbindungen, die sich unter sauren oder basischen Bedingungen zu $Al_2O_3$, $B_2O_3$, $TiO_2$ oder den entsprechenden Hydroxiden hydrolysieren lassen. Wenn in der allgemeinen Formel (II) M für Aluminium steht, haben die Gruppen R', die gleich oder verschieden sein können, z.B. die Bedeutung Halogen, Alkyl, Alkoxy und/oder Hydroxy. Besonders bevorzugte Reste sind auch hier Alkoxy- und/oder Hydroxygruppen. Dabei sind die genannten Gruppen so definiert, wie für die Siliciumverbindungen bereits angegeben. Auch die übrigen im Zusammenhang mit den Siliciumverbindungen gemachten Bemerkungen gelten für die Aluminiumverbindungen entsprechend.

Handelt es sich bei der Aluminiumverbindung um ein hydrolysierbares Aluminiumsalz, so ist dieses Salz von anorganischen oder organischen Säuren, wie z.B. Salpetersäure, Ameisensäure, Essigsäure, Propionsäure, Oxalsäure, Zitronensäure und Trifluormethansulfonsäure abgeleitet. Besonders bevorzugt werden Aluminiumsalze von Säuren, die leicht verflüchtigbar sind oder sich thermisch unter Bildung flüchtiger Produkte zersetzen lassen. Dies gilt insbesondere für Aluminiumsalze von Salpetersäure, Ameisensäure, Essigsäure, Propionsäure, Citronensäure und Trifluormethansulfonsäure. Dabei kann das entsprechende Anion gegebenenfalls bereits die Rolle des Komplexbildners - allein oder zusammen mit einem extra zugesetzten Komplexbildner -übernehmen. Dies gilt z.B. für Acetate und Propionate.

Konkrete Beispiele für erfindungsgemäß verwendbare Aluminiumverbindungen sind $Al(CH_3)_3$, $Al(C_2H_5)_3$, $Al(i-C_3H_7)_3$, $Al(sek.-C_4H_9)_3$, $AlCl_3$, Al-$(OCH_3)_3$, $Al(OC_2H_5)_3$, $Al(i-OC_3H_7)_3$, $Al(sek.-OC_4H_9)_3$, Aluminiumformiat, Aluminiumacetat, Aluminiumpropionat, Aluminiumcitrat und Aluminiumnitrat.

Selbstverständlich können auch von diesen monomeren Verbindungen abgeleitete oligomere Verbindungen sowie bereits teilhydrolysierte bzw. teilkondensierte Verbindungen Verwendung finden. Dies gilt nicht nur für die Aluminiumverbindung, sondern auch für die B- und Ti-Verbindungen sowie andere gegebenenfalls anwesende hydrolysierbare Komponenten. Gegebenenfalls können auch Oligomere mit voneinander verschiedenen Zentralatomen eingesetzt werden.

Wenn in der allgemeinen Formel (II) M für Bor steht, sind die Gruppen R' z.B. Halogen, Alkoxy und/oder Hydroxygruppen, während in den Verbindungen der Formel (III) R' insbesondere Halogen, Alkoxy, Acyloxy und/oder Hydroxy bedeutet. Besonders bevorzugt werden auch in diesen Fällen Alkoxy- und Hydroxyverbindungen. Die im Zusammenhang mit den Siliciumverbindungen hinsichtlich der Reste R gemachten Bemerkungen gelten für die Reste R', insbesondere hinsichtlich deren Bedeutung, entsprechend.

Konkrete Beispiele für erfindungsgemäß verwendbare (und bevorzugte) B- und Ti - Verbindungen sind $B(OCH_3)_3$, $B(OC_2H_5)_3$, $B(OH)_3$, $TiCl_4$, $Ti(OC_2H_5)_4$, $Ti(n-OC_3H_7)_4$, $Ti(i-OC_3H_7)_4$, Ti-$(OC_4H_9)_4$, $Ti(2-ethylhexoxy)_4$ sowie davon abgeleitete oligomere Verbindungen.

Eine Verbindung der Formel II oder III kann entweder alleine oder zusammen mit anderen Verbindungen der Formeln II und III eingesetzt werden.

Die im erfindungsgemäßen Verfahren verwendete Komponente (c) ist mindestens eine hydrolysierbare Verbindung eines Elements aus der Gruppe Lithium, Natrium, Kalium, Rubidium, Cäsium, Beryllium, Magnesium, Calcium, Strontium und Barium. Auch teilweise oder vollständig hydrolysierte derartige Verbindungen können eingesetzt werden, so lange sie sich unter den Reaktionsbedingungen noch zufriedenstellend im Reaktionsmedium lösen. Besonders bevorzugt werden Verbindungen der Erdalkalimetalle, insbesondere von Calcium und Barium. Erfindungsgemäß können nur Erdalkalimetallverbindungen, nur Alkalimetall verbindungen oder sowohl Erdalkali- als auch Alkalimetallverbindungen als Komponente (c) eingesetzt werden.

Als hydrolysierbare Verbindungen eignen sich insbesondere Alkoholate und Amide, aber auch Nitrate, Carbonate und Salze von organischen Säuren, wie z.B. Acetate, Propionate und Citrate. Es gilt jedoch auch hier, daß als Komponente (c) solche Verbindungen bevorzugt werden, die nach der Hydrolyse zu Produkten führen, die sich später - mit Ausnahme des Metalls - rückstandsfrei entfernen lassen. Unter den hydrolysierbaren Salzen der genannten Elemente sind wie bei den Aluminiumverbindungen diejenigen besonders bevorzugt, deren Anion bereits die Rolle eines Komplexbildners übernehmen kann.

Bei den Alkoholaten und gegebenenfalls den Amiden sind die organischen Reste insbesondere Alkylgruppen und vor allem solche, wie sie im Zusammenhang mit den Siliciumverbindungen definiert wurden. Besonders bevorzugt sind die Methylate, Ethylate, n-Propylate, Isopropylate und Butylate. Die Amide leiten sich vorzugsweise von Ammoniak oder niederen Mono- und Dialkylaminen ab. Beispiele hierfür sind Methylamin, Dimethylamin, Ethylamin und Diethylamin.

Wie bereits erwähnt, können aber auch Hydroxide, Oxide und Oxidhydrate der erwähnten Alkali- und Erdalkalimetalle erfindungsgemäß Verwendung finden, soweit sie sich im Reaktionsmedium unter den gegebenen Bedingungen noch zufriedenstellend lösen. So können z.B. gegebenenfalls Calciumoxid, Bariumoxid, Calciumhydroxid, Bariumhydroxid, Natriumhydroxid, Kaliumhydroxid als solche eingesetzt werden, insbesondere dann, wenn unter sauren Bedingungen gearbeitet wird.

Konkrete Beispiele für hydrolysierbare Verbindungen, die als Komponente (c) (bevorzugt) Verwendung finden können sind: $Ba(OCH_3)_2$, $Ba(OC_2H_5)_2$, $Ba(n-OC_3H_7)_2$, $Ba(i-OC_3H_7)_2$, $Ba(OC_4H_9)_2$, Bariumnitrat, Bariumacetat, Bariumpropionat, und die entsprechenden Calcium- und Magnesium-verbindungen.

Außer den als Komponenten (a) bis (c) im erfindungsgemäßen Verfahren verwendeten Verbindungen können auch andere hydrolysierbare oder bereits hydrolysierte Verbindungen eingesetzt werden. Dies gilt insbesondere für Verbindungen von Elementen der Hauptgruppen III und IV des Periodensystems, vorzugsweise Gallium, Germanium, Zinn und Blei. Konkrete Beispiele für derartige Verbindungen sind z.B. die Acetate und Nitrate, aber auch die Oxide, Oxidhydrate und Hydroxide, soweit sie unter den Reaktionsbedingungen im Reaktionsmedium löslich sind.

Auch hydrolysierbare oder hydrolysierte Verbindungen von P, As, Sb und Bi sowie von Nebengruppenmetallen, wie z.B. V, Cr, Mn, Fe, Ni, Co, Cu, Zn, Zr und der Lanthaniden, können im erfindungsgemäßen Verfahren Verwendung finden. Konkrete Beispiele hierfür sind z.B. die Acetate und Nitrate.

Einen der wesentlichsten Aspekte des erfindungsgemäßen Verfahrens stellt die Anwesenheit eines Komplexbildners, der ausgewählt ist aus ß-Carbonylcarbonsäureestern und $C_2$-$C_5$-Carbonsäuren oder deren Carboxylationen, während der Hydrolyse der hydrolysierbaren Verbindungen dar. Der Komplexbildner hat insbesondere die Aufgabe, die gegenüber Wasser sehr reaktiven Verbindungen, insbesondere diejenigen von Al, aber auch die von B, Ti und der Alkali- und Erdalkalimetalle, im fortgeschrittenen Zustand der Umsetzung in der wäßrigen Lösung zu halten, d.h. das Auftreten von Präzipitaten zu verhindern. Dadurch wird gewährleistet, daß die in der Regel gegenüber Wasser weit weniger reaktive Siliciumverbindung, d.h. die Komponente (a), unter Aufrechterhaltung eines homogenen Systems, das für die Herstellung von Glas von äußerster Wichtigkeit ist, praktisch vollständig hydrolysiert bzw. an die bereits in der Lösung vorhandenen Kondensate angebunden wird, was wiederum verhindert, daß leicht flüchtige Silicium-Ausgangsverbindungen bzw Oligomere derselben während der Umsetzung oder bei der späteren Behandlung bei erhöhter Temperatur aus dem Reaktionssystem entweichen. Das bedeutet, daß z.B. sowohl ein hochreaktives Aluminiumalkoxid als auch ein wenig reaktiver Kieselsäureester ohne Verluste an Kieselsäureester und ohne Auftreten eines aluminiumhaltigen Präzipitats hydrolysiert werden können.

Die erfindungsgemäßen Komplexbildner sind z.B. ß-Carbonylcarbonsäureester der allgemeinen Formel (IV):

$$R^1-\overset{\overset{\text{O}}{\|}}{C}-CR^2R^3-\overset{\overset{\text{O}}{\|}}{C}-OR^4 \qquad (IV)$$

in welcher $R^1$ und $R^4$ jeweils unabhängig für geradkettige oder verzweigte Alkylgruppen mit 1 bis 4 Kohlenstoffatomen, insbesondere Methyl oder Ethyl, und $R^1$ außerdem für Alkoxygruppen mit 1 bis 4 Kohlenstoffatomen , insbesondere Methoxy und Ethox, stehen und $R^1$ und $R^3$, die gleich oder verschieden sein können, Wasserstoff, Halogen und Alkyl mit 1 bis 4 Kohlenstoffatomen, insbesondere Wasserstoff, bedeuten. Ein besonders bevorzugter Komplexbildner der Formel (IV) ist Acetessigsäureester.

Weitere geeignete Komplexbildner sind z.B. Carbonsäuren der allgemeinen Formel (V):

$$R^5-COOH$$

oder deren Carboxylationen, wobei $R^5$ ein geradkettiger oder verzweigter Alkylrest mit 1 bis 4 Kohlenstoffatomen ist, der gegebenenfalls Halogensubstituiert ist. Ein besonders bevorzugter Komplexbildner der Formel (V) is Essigsäure oder Acetat.

Vorzugsweise is der erfindungsgemäße Komplexbildner eine Verbindung, die sich später leicht und insbesondere rückstandsfrei aus dem Endprodukt entfernen läßt.

Der Komplexbildner wird entweder als solcher zugegeben oder aber man setzt eine oder mehrere der Ausgangsverbindungen (a) bis (c) bereits in vorkomplexierter Form, z.B. als Acetat, ein. Besonders im Falle von Anionen, die als Komplexbildner wirken, ist die letztgenannte Art bevorzugt. So kann man z.B. als Komponente (b) Aluminiumacetat und als Komponente (c) Bariumacetat verwenden. Diese Verwendung kann entweder allein oder zusammen mit anderen Verbindungen der jeweiligen Klasse erfolgen.

Das erfindungsgemäße Verfahren wird gegebenenfalls - und vorzugsweise - in Anwesenheit eines Kondensationskatalysators durchgeführt. Als Kondensationskatalysatoren eignen sich insbesondere Protonen oder Hydroxyionen abspaltende Verbindungen und Bronsted-Basen wie Alkoholate und Amine bzw. Aminoderivate. Spezielle Beispiele für Kondensationskatalysatoren sind organische oder anorganische Säuren, wie Salpetersäure, Ameisensäure oder Essigsäure, sowie organische oder anorganische Basen, wie Ammoniak, Alkali- und Erdalkalimetallhydroxide, z.B. Natrium-, Kalium- oder Calciumhydroxid, Alkoholate und im Reaktionsmedium lösliche Amine, z.B. niedere Alkylamine und Alkanolamine. Kondensationskatalysatoren, die sich später rückstandsfrei entfernen lassen, d.h. flüchtige Säuren und Basen, insbesondere Chlorwasserstoff, Eisessig, Ammoniak und Triethylamin, sind hierbei besonders bevorzugt. Wie ersichtlich, sind einige der oben genannten Katalysatoren identisch mit den als Komponente (b) und/oder (c) im erfindungsgemäßen Verfahren verwendbaren oder daraus durch Hydrolyse entstehenden Verbindungen. Demnach ist die unabhängige Zugabe eines Kondensationskatalysators zumindest in den Fällen vielfach nicht erforderlich, in denen die Hydrolyse bzw. Kondensation im alkalischen Medium erfolgen soll.

Bei dem im erfindungsgemäßen Verfahren verwendbaren Lösungsmittel handelt es sich vorzugsweise um Wasser, einen ein- oder mehrwertigen Alkohol oder um ein aprotisches, polares, organisches Lösungsmittel, wie z.B. ein Keton (beispielsweise Aceton oder Methylethylketon), einen Ester (beispielsweise Essigsäureethylester), einen Ether (beispielsweise Tetrahydrofuran oder Dioxan) oder ein Amid (beispielsweise Dimethylformamid oder Dimethylacetamid). Auch Pyridin und DMSO können Verwendung finden.

Selbstverständlich können auch Mischungen der obigen Lösungsmittel eingesetzt werden.

Insbesondere wenn als Komponente (a) bis (c) Alkoxyverbindungen eingesetzt werden, sind Alkohole die bevorzugten Lösungsmittel, weil bei der Hydrolyse ohnehin Alkohol entsteht. Beispiele für derartige Alkohole sind Methanol, Ethanol, Propanol, Isopropanol, n-Butanol und Ethylenglykol. Auch im Falle der Lösungsmittel gilt, daß das Lösungsmittel später vorzugsweise leicht und rückstandsfrei entfernbar sein soll.

Insbesondere dann, wenn als Komponenten (b) und (c) Salze eingesetzt werden, ist ein bevorzugtes Lösungsmittel Wasser oder eine Mischung aus Wasser und Alkohol.

Das Lösungsmittel sollte in jedem Fall so beschaffen sein, daß die Ausgangsmaterialien und insbesondere die Hydrolyse-bzw. Kondensationsprodukte in Form einer homogenen Lösung vorliegen.

Obwohl für das Mengenverhältnis der im erfindungsgemäßen Verfahren eingesetzten Komponenten keine Beschränkungen gegeben sind und das jeweils optimale Mengenverhältnis z.B. von der Art und der Zusammensetzung des gewünschten Endprodukts abhängen, wird es erfindungsgemäß bevorzugt, daß für die Komponenten (a), (b) und (c) die folgenden Mengenverhältnisse, bezogen auf die Gesamtmenge der Komponenten (a) bis (c), eingehalten werden (berechnet als Oxide):
25 bis 90 Gew.-% vorzugsweise 30 bis 80 Gew -% und insbesondere 45 bis 70 Gew.-% $SiO_2$;
1 bis 40 Gew.-%, vorzugsweise 3 bis 30 Gew.-% und insbesondere 5 bis 20 Gew.-% $Al_2O_3/B_2O_3/TiO_2$;
9 bis 60 Gew.-%, vorzugsweise 17 bis 50 Gew.-% und insbesondere 20 bis 40 Gew -% Alkalimetalloxid/Erdalkalimetalloxid.

Die Menge an als Komplexbildner wirkender Spezies liegt im allgemeinen bei 0,1 bis 3 Mol, vorzugsweise 0,5 bis 2,0 Mol und insbesondere 0,5 bis 1,0 Mol, bezogen auf 1 Mol der eingesetzten Al-, B- und/oder Ti-Verbindung(en). Bei Verbindungen der Formel (III) können bis zu 4 Mol Komplexbildner pro Mol Ti vorteilhaft sein. Das Lösungsmittel wird bevorzugt in solchen Mengen zugegeben, daß einsteils die Bildung einer homogenen Lösung gewährleistet ist und andernteils später nicht übermäßig große Lösungsmittelmengen entfernt werden müssen.

Die Mindestmenge an zuzusetzendem Wasser ist die Menge, die stöchiometrisch zur vollständigen Hydrolyse aller anwesenden hydrolysierbaren Gruppen in den Ausgangsverbindungen anwesend isr Vorzugsweise wird es jedoch im Überschuß eingesetzt, z B mindestens 5-fachem Überschuß und insbesondere mindestens 10-fachem Überschuß.

Wie bereits oben erwähnt, kann unter bestimmten Voraussetzungen Wasser auch das verwendete Lösungsmittel oder Bestandteil des verwendeten Lösungsmittelsystems sein. In anderen Fällen wird das Wasser entweder als solches zugegeben oder mit Hilfe von wasserhaltigen organischen oder anorganischen Systemen in das Reaktionssystem eingetragen. Als besonders geeignet hat sich in vielen Fällen die Eintragung der Wassermengen in das Reaktionsgemisch mit Hilfe von feuchtigkeitsbeladenen Adsorbentien, z.B. Molekularsieben, wasserhaltigen organischen Lösungsmitteln, z.B. 80%igem Ethanol erwiesen. Die Wasserzugabe kann auch über eine Reaktion erfolgen, bei der Wasser gebildet wird, z.B. bei der Esterbildung aus Säure und Alkohol (CCC = Chemical Controlled Condensation).

Die optimale Art der Wasserzugabe ist in gewissem Maße auch von der Art der eingesetzten Ausgangsmaterialien, insbesondere deren Reaktivität gegenüber Wasser, und der Reihenfolge der Zugabe der Ausgangsmaterialien, abhängig.

Das erfindungsgemäße Verfahren kann prinzipiell auf jede denkbare Art durchgeführt werden, insbesondere was die Reihenfolge der Zugabe der einzelnen Komponenten betrifft. Es sollte lediglich darauf geachtet werden, daß die als Komplexbildner wirkende Spezies bereits anwesend ist, wenn die leichter hydrolysierbaren Ausgangsmaterialien, insbesondere die Komponente (b), mit größeren Wassermengen in Berührung kommen. In den meisten Fällen empfiehlt es sich außerdem, entweder das Wasser oder die leicht hydrolysierbaren Verbindungen nicht auf einmal, sondern stufenweise zuzugeben. Eine Ausnahme bildet hier der Fall, bei dem als Komponenten (b) und (c) Salze und als Lösungsmittel Wasser oder ein wasserhaltiges System verwendet werden.

Die Temperatur im erfindungsgemäßen Verfahren sollte im allgemeinen nicht wesentlich über der Raumtemperatur liegen, da bei höheren Temperaturen die Gefahr besteht, daß die Hydrolyse zu schnell und heftig abläuft so daß sich trotz Anwesenheit eines Komplexbildners Präzipitate bilden. Ein bevorzugter Temperaturbereich liegt bei 0 bis $40\,^\circ$C, insbesondere 15 bis $25\,^\circ$C. In Einzelfällen kann es erforderlich sein, die Reaktionswärme durch Kühlmittel abzuführen.

Nach der Zugabe der gesamten erforderlichen Wassermenge ist es vorteilhaft, den Ansatz noch mehrere Stunden, z.B. 24 Stunden, bei Raumtemperatur oder leicht erhöhter Temperatur zu belassen bzw. zu rühren.

Eine einfache Möglichkeit zur Gelpulverherstellung besteht in der Koagulation des resultierenden Sols an Luft, die schon bei Raumtemperatur einsetzt und durch Temperaturerhöhung beschleunigt werden kann. Das Erhitzen des resultierenden Gels auf eine Temperatur, bei der das verwendete Lösungsmittel und gegebenenfalls andere leicht flüchtige Komponenten (z.B. Alkohole aus der Hydrolyse der Alkoholate) verdampfen, z.B. zwischen 70 und $130\,^\circ$C, liefert dann ein Gelgranulat, das in der Regel leicht aufgemahlen werden kann.

Ein bevorzugtes Verfahren zur Weiterverarbeitung des entstandenen Gels oder Sols ist die Sprühtrocknung. Diese Sprühtrocknung wird vorteilhaft zur Erzeugung eines Pulvers einheitlicher Kornform und Korngrößenverteilung aus Lösungen oder Suspensionen eingesetzt. Hierzu kann man einen im Handel erhältlichen Sprühtrockner (z.B. 190 Minispray von der Fa. Büchi) verwenden. Die Korngröße des entstehenden Gelpulvers läßt sich dabei über die Konzentration des Sols (bzw. Gels) in der Lösung steuern: Je höher die Konzentration des Sols in der Lösung, desto größer das Korn. Auch die Sprühtrocknung wird vorzugsweise bei Temperaturen durchgeführt, bei denen Wasser, das Lösungsmittel und gegebenenfalls andere leicht flüchtige Komponenten verdampfen. Nach Verdampfung von Lösungsmittel und Wasser wird für Temperaturen über ungefähr $150\,^\circ$C der Gewichtsverlust des Gelpulvers vorwiegend durch die Pyrolyse organischer Verbindungen und Abgabe von Wasser bestimmt. In der Regel bleibt dann bei Temperaturen über ungefähr $700\,^\circ$C das Gewicht des Gelpulvers nahezu konstant. Für die thermische Verdichtung des Gelpulvers kann man z.B. gemäß folgendem Temperaturprogramm arbeiten:

(i) Aufheizen auf $350\,^\circ$C mit 80 $Kh^{-1}$;

(ii) Tempern bei $350\,^\circ$C für 16 h;

(iii) Aufheizen auf $700\,^\circ$C mit 40 $Kh^{-1}$;

(iv) Tempern bei $700\,^\circ$C für 0,5 h;

(v) Abkühlung auf Raumtemperatur mit 150 $Kh^{-1}$.

Die so erhaltenen, thermisch verdichteten Gelpulver können bei Temperaturen, die unterhalb oder nur wenig oberhalb der Glasübergangstemperatur des jeweiligen Glases liegen, zum Glas zusammengesintert werden. Dadurch wird vermieden, daß das Glas Temperatur bereiche hoher Kristallisations- und Keimbildungsgeschwindigkeit (diese Bereiche liegen deutlich oberhalb der Glasübergangstemperatur) durchläuft. Damit eignet sich das erfindungsgemäße Verfahren insbesondere zur Herstellung von Gläsern, die eine hohe Kristallisationsneigung besitzen, wie dies insbesondere bei Gläsern mit hohem Gehalt an zweiwertigen (Erdalkali)ionen der Fall ist.

Das erfindungsgemäße Verfahren hat außerdem den Vorteil, daß unter beschleunigten Bedingungen homogene Sole bzw. Gele synthetisiert werden können, ohne daß Phasenseparations- bzw Präzipitationserscheinungen auftreten und ohne daß unreproduzierbare Stöchiometrien durch Komponentenverlust auftreten. Durch Einführung der erfindungsgemäßen Komplexbildner kann überraschenderweise die Hydrolyse reaktiver Komponenten so weit geführt werden, daß die resultierenden Hydrolyseprodukte flüchtige Komponenten, wie z.B. schwer hydrolysierbare Kieselsäureester, rasch binden, daß sie dabei aber nicht zur Bildung von Agglomeraten, Phasenseparationen oder insbesondere Präzipitaten neigen. Damit ist es möglich, kinetisch schwer beherrschbare Systeme (z.B. Systeme aus sehr rasch reagierenden Alkoxiden oder deren Folgeprodukten und sehr langsam reagierenden Alkoxiden) gut zu beherrschen.

Die über das erfindungsgemäße Verfahren und anschließendes Trocknen und thermisches Verdichten erhältlichen Gelpulver eignen sich insbesondere zur Herstellung von Glasfritten.

Die nachfolgenden Beispiele und Vergleichsbeispiele veranschaulichen die vorliegende Erfindung. Soweit nicht anders angegeben, wurden die Umsetzungen bei Raumtemperatur durchgeführt.

## Beispiel 1

Zu 4,74 g $Al(OC_4H_9)_3$, gelöst in 100 ml Isopropanol, wurden als Komplexbildner 2,50 g Acetessigsäureethylester in 24 ml Isopropanol zugegeben (das molare Verhältnis von Aluminium zu Komplexbildner betrug dabei 1:1). Zu dieser Lösung wurden dann 0,69 ml Wasser in 24 ml Isopropanol getropft (entsprechend der für die vollständige Hydrolyse der restlichen Alkoxygruppen des $C_6H_9O_3Al(OC_4H_9)_2$ benötigten Wassermenge) und 14,56 g Si(OCH₃)₄ tropfenweise zugegeben. Schließlich wurden 2,93 g Barium, gelöst in 60 ml Methanol, zugetropft und 400 ml Wasser unter Rühren zugegeben. Die Lösung trübte sich sofort ein und gelierte nach kurzer Zeit. Durch intensives Rühren bildete sich dann wieder ein Sol. Nach einer Rührzeit von 24 Stunden im geschlossenen Gefäß wurde der Ansatz sprühgetrocknet und bis auf 700°C unter Sauerstoffatmosphäre aufgeheizt. Die chemische Analyse ergab für den Massengehalt: 31,3% BaO, 9,4% Al₂O₃ und 57,5% SiO₂ bei einem Glühverlust von 1,8%. Dies entspricht einem Massengehalt der Oxide von 31,9% BaO, 9,6% Al₂O₃ und 58,5% SiO₂ (theoretisch 32,7% BaO, 9,8% Al₂O₃ und 57,5% SiO₂).

Dieses Beispiel zeigt, daß es möglich ist, Bariumalumosilicatsysteme eutektischer Zusammensetzung über die Hydrolyse und Kondensation von Alkoxiden herzustellen.

Vergleichsbeispiel

Zu 4,98 g Al(OC₄H₉)₃ in 60 ml Isopropanol wurden 3,14 g Barium, gelöst in 84 ml Isopropanol gegeben. Zur entstandenen Lösung wurden 13,83 g Si(OCH₃)₄ in 50 ml Isopropanol und 8,4 ml Wasser in 20 ml Isopropanol zugesetzt. Schließlich wurden unter Rühren 10 Tropfen konzentrierte Salpetersäure in 10 ml Wasser zugetropft. Nach Zugabe der Tetramethoxysilanlösung wurde die Reaktionslösung milchig trüb, klarte aber bei Zugabe der Wasser-Isopropanol-Lösung wieder auf.

Nach 5stündigem ständigen Rühren im verschlossenen Kolben wurde das Sol sprühgetrocknet. Die chemische Analyse des sprühgetrockneten Gelpulvers ergab für den Massengehalt: 38,9% BaO, 11,5% Al₂O₃ und 20,8% SiO₂ bei einem Glühverlust von 26,1%. Dies entspricht einem Massengehalt der Oxide von 53,9% BaO, 15,9% Al₂O₃ und 30,2% SiO₂.

Trotz Einsatz der für die vollständige Hydrolyse der Alkoxide erforderlichen Wassermenge ist ein erheblicher Verlust an Siliciumkomponente zu verzeichnen. Bei weiterem Zusatz von Wasser wurden Ausfällungen beobachtet.

**Beispiel 2**

13,83 g Si(OCH₃)₄ wurden in 80 ml Methanol gelöst. Der resultierenden Lösung wurden 40 ml Wasser (10-fache für die Hydrolyse benötigte Menge) und 0,15 ml konzentrierte Salpetersäure zugesetzt. Nach einer Rührdauer von 30 Minuten wurden der Reaktionslösung 5,85 g Ba(CH₃COO)₂ in 40 ml H₂O und 3,79 g Al(NO₃)₃.9H₂O in 80 ml H₂O zugegeben. Der Ansatz wurde schnell trüb und gelierte nach kurzer Zeit. Durch starkes Rühren bildete sich ein Sol, das nach einer Rührdauer von 24 Stunden sprühgetrocknet und unter Sauerstoffatmosphäre bis auf 700°C aufgeheizt wurde Die chemische Analyse ergab für den Massengehalt: 33,4% BaO, 8,4% Al₂O₃ und 56,5% SiO₂ bei einem Glühverlust von 1,7%. Dies entspricht einem Massengehalt der Oxide von 34,0% BaO, 8,5% Al₂O₃ und 57,5% SiO₂.

**Beispiel**

Zur Herstellung von Bariumalumosilicatgelpulver aus den Produkten der Beispiele 1 und 2 wurde ein Büchi-Sprühtrockner (190 Minispray) verwendet. Die Temperatur an der Düse betrug 160°C und am Ausgang des Sprühzylinders 80°C Der Feststoffdurchsatz betrug bei dem unter Verwendung von Bariumacetat und Aluminiumnitrat hergestellten Sol 15 bis 20 g pro Stunde, während für den Alkoxidansatz entsprechend der geringeren Konzentration nur 5 bis 8 g pro Stunde erhalten wurden.

Die durch N₂-Absorption bestimmte BET-Oberfläche betrug für den Ansatz mit dem Produkt des Beispiels 1 266 m²/g und für den Ansatz mit den Produkten der Beispiele 2 und 3 208 m²/g.

**Beispiel 4**

Die nach Beispiel 3 erhaltenen Gelpulver wurden unter Verwendung des weiter oben angegebenen Temperaturprogramms thermisch verdichtet. Nach der thermischen Verdichtung von durch Lufttrocknung erhaltenen Gelpulvern bis 700°C wurden glasartige Pulver erhalten.

Während die BET-Oberfläche für das bei 700°C calcinierte Gelpulver (aus dem Ansatz des Beispiels 1) 191 m²/g betrug, wurde nach der thermischen Behandlung unter Sauerstoff bei 950°C für 5 Stunden eine spezifische Oberfläche von 3 m²/g gemessen. Dies entspricht dem Wert für ein geschmolzenes und aufgemahlenes Glas. Selbst bei einer Haltezeit von 1 Stunde bei 1100°C gingen die verdichteten Presslinge vollständig in den Glaszustand über.

**Ansprüche**

1. Verfahren zur Herstellung von zu Glas verarbeitbaren Kondensationsprodukten durch hydrolytische Kondensation von Verbindungen der Elemente, deren Anwesenheit im Glas-Endprodukt gewünscht wird, dadurch **gekennzeichnet,** daß man, gegebenenfalls in Anwesenheit eines Kondensationskatalysators, eine Lösung, enthaltend

(a) mindestens eine Verbindung der allgemeinen Formel (I)

$SiR_4$   (I)

in welcher die Reste R, die gleich oder verschieden sein können, hydrolysierbare Gruppen oder Hydroxy bedeuten, und/oder ein davon abgeleitetes Oligomeres;

(b) mindestens eine Verbindung der allgemeinen Formel (II) oder (III)

$MR'_3$   (II)

$TiR'_4$   (III)

in welchen M für Al oder B steht und die Reste $R'$, die gleich oder verschieden sein können, hydrolysierbare Gruppen oder Hydroxy bedeuten, und/oder ein hydrolysierbares Aluminiumsalz und/oder ein von diesen Verbindungen abgeleitetes Oligomeres; sowie

(c) mindestens eine hydrolysierbare Verbindung oder mindestens ein Hydroxid, Oxid oder Oxidhydrat eines Elements aus der Gruppe Lithium, Natrium, Kalium, Rubidium, Cäsium, Beryllium, Magnesium, Calcium, Strontium und Barium

in Anwesenheit eines Komplexbildners, der ausgewählt ist aus β-Carbonylcarbonsäureestern und $C_2$-$C_5$-Carbonsäuren oder deren Carboxylationen, mit mindestens der zur vollständigen Hydrolyse der anwesenden hydrolysierbaren Gruppen stöchiometrisch erforderlichen Wassermenge in Kontakt bringt.

2. Verfahren nach Anspruch 1, dadurch gekennzeichnet, daß in der Lösung außerdem hydrolysierbare oder bereits teilweise hydrolysierte oder kondensierte Verbindungen eines oder mehrerer Elemente der Hauptgruppen III und IV des Periodensystems, insbesondere Gallium, Germanium, Zinn und Blei, anwesend sind.

3. Verfahren nach einem der Ansprüche 1 oder 2, dadurch gekennzeichnet, daß als Komplexbildner Acetessigester, Essigsäure oder Acetat eingesetzt wird.

4. Verfahren nach einem der Ansprüche 1 bis 3, dadurch gekennzeichnet, daß die als Komplexbildner wirkende Spezies in einer Menge von 0,5 bis 1,0 Mol, bezogen auf 1 Mol der eingesetzten Verbindung(en) von Al, B und/oder Ti, verwendet wird.

5. Verfahren nach einem der Ansprüche 1 bis 4, dadurch gekennzeichnet, daß die Komponenten (a), (b) und (c) in folgenden relativen Mengen, berechnet als Oxide, eingesetzt werden:

25 bis 90, vorzugsweise 30 bis 80 Gew.-% $SiO_2$

1 bis 40, vorzugsweise 3 bis 30 Gew.-% $Al_2O_3$/$B_2O_3$/$TiO_2$

9 bis 60, vorzugsweise 17 bis 50 Gew.-% Alkalimetalloxid/Erdalkalimetalloxid.

6. Verfahren nach einem der Ansprüche 1 bis 5, dadurch gekennzeichnet, daß in der Verbindung der allgemeinen Formel (I) die Gruppen R für Alkoxy, Acyloxy, $NR''_2$ ($R''$ = H und/oder Alkyl) und/oder Hydroxy, vorzugsweise Alkoxy und/oder Hydroxy stehen.

7. Verfahren nach einem der Ansprüche 1 bis 6, dadurch gekennzeichnet, daß die Komponente (b) mindestens eine Verbindung der allgemeinen Formel (II), in welcher M für Al steht und $R'$ Alkyl, Alkoxy, Acyloxy und/oder Hydroxy, vorzugsweise Alkoxy und/oder Hydroxy, bedeutet, umfaßt.

8. Verfahren nach einem der Ansprüche 1 bis 7, dadurch gekennzeichnet, daß es sich bei der Komponente (c) um eine Erdalkalimetallverbindung, insbesondere eine solche von Calcium oder Barium, vorzugsweise in Form eines Alkoxids, Nitrats oder Acetats, handelt.

9. Verfahren nach einem der Ansprüche 1 bis 8, dadurch gekennzeichnet, daß man zur Hydrolyse einen Wasserüberschuß, vorzugsweise einen mindestens 5-fachen, und insbesondere einen mindestens 10-fachen Überschuß verwendet.

10. Verfahren nach einem der Ansprüche 1 bis 9, dadurch gekennzeichnet, daß man das Reaktionsgemisch nach der Wasserzugabe vorzugsweise mehrere Stunden bei Raumtemperatur rührt und dann bei erhöhter Temperatur, vorzugsweise Temperaturen über 80° C, flüchtige und verflüchtigbare Bestandteile entfernt.

11. Kondensationsprodukte, erhältlich gemäß dem Verfahren eines des Ansprüche 1 bis 10.

12. Verwendung der Kondensationsprodukte nach Anspruch 11 für die Herstellung von Glasfritten.